# EUROPEAN PATENT SPECIFICATION

(11) **EP 2 932 728 B1**
(45) Date of publication and mention of the grant of the patent: **26.04.2017**
(21) Application number: 12826608.7
(22) Date of filing: 13.12.2012
(51) Int. Cl.: H04Q 11/00

(54) **"SHIP, IN PARTICULAR CRUISE SHIP, WITH INTEGRATED COMMUNICATION NETWORK ON BOARD"**
SCHIFF, INSBESONDERE KREUZFAHRTSCHIFF, MIT INTEGRIERTEM KOMMUNIKATIONSNETZ AN BORD
NAVIRE, ET NAVIRE DE CROISIÈRE EN PARTICULIER, AVEC RÉSEAU DE COMMUNICATION INTÉGRÉ À BORD

(43) Date of publication of application: 21.10.2015
(73) Proprietor: Fincantieri S.p.A., 34121 Trieste (IT)
(72) Inventor: TRUANT, Emanuele, I-34121 Trieste (IT)
(74) Representative: Zanettin, Gianluigi
(86) International application number: PCT/IT2012/000379
(87) International publication number: WO 2014/091507

(56) References cited:
- EP-A1- 1 463 219
- DE-A1- 3 235 238
- JP-A- S6 367 846
- US-A1- 2009 156 159
- US-A1- 2009 269 062

## Description

### FIELD OF APPLICATION

The present invention relates to a ship, in particular a cruise ship, with integrated communication network on board.

### STATE OF THE ART

Currently, the integrated communication network on board ship (SDCN, Ship Digital Communication Network) is made using a traditional technology based on active switches and can be extended in a radial or ring form with two (primary-intermediate) or three (primary-intermediate-final) level architecture.

A similar system is for example disclosed in document EP 1 463 219 A1.

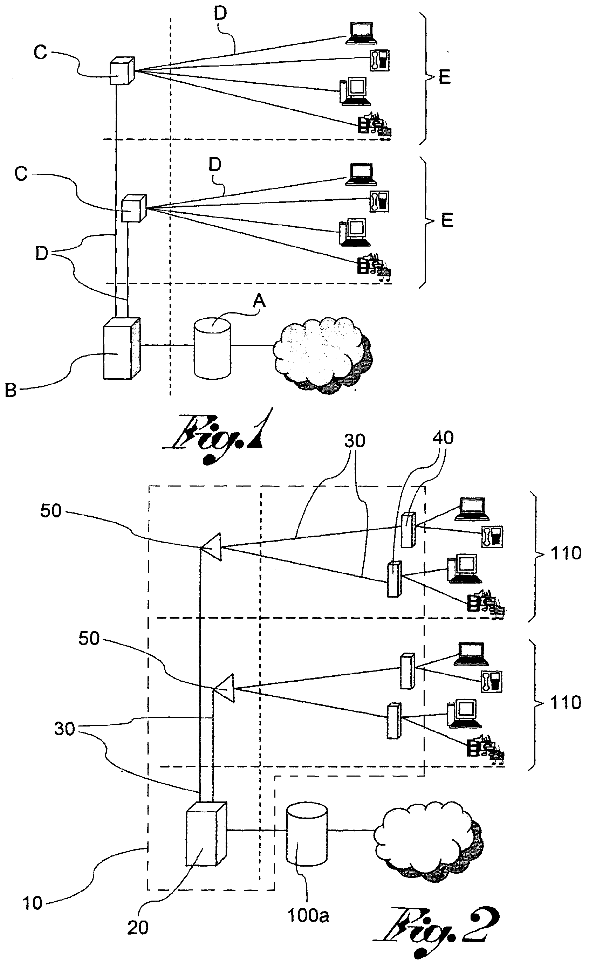

In current naval applications, from the data centre (or data centres in redundant architectures) final users are reached with a radial structure via active switches installed in IDF (Intermediate Distribution Frames), which in turn must be installed in an adequate, air-conditioned utility room. Distribution takes place by means of a copper wire from the data centre to the final user. A schematic example is illustrated in Figure 1, where A indicates the audio video data centre/sources (Server Core Router), B a primary switch (Distribution Switch Router) directly connected to the servers, C the active switches, D the copper wires and E the final users. In particular, the users are connected radially to the switches with copper wires Cat 5/6 less than 90 m long.

The actives switches are powered by a dedicated electricity network and in normal conditions provide the PoE power supply to the users supporting such standard.

An SDCN system such as that just described entails a series of drawbacks to the shipyard and operator management caused both by the technology of the active switches and the architecture of the network.

The active switches (which represent the centre of the radial distribution) are large-sized electronic appliances which are installed in cabinets (IDF) of considerable dimensions (generally 800x600x1800mm length x depth x height). The positioning of these cabinets is not easy since they must be installed in dedicated technical rooms with enough space for installation and servicing. Considering that on board ship there may be from several dozen to over a hundred thereof, the need to use precious space for their installation ensues to the detriment of areas to be dedicated instead to the payload or crew follows.

Active switches are hardware appliances powered by an alternate current low voltage network. The efficiency is not very high and the power dissipated is considerable. A waste of electricity ensues as well as the need to adequately air-condition the rooms. In addition, in the case of failure thereof, (or in the worse case of total blackout) the final users powered PoE will not function. The panic created by a phone in a passenger cabin not working in the case of a blackout is easy to imagine.

A bundle of cables extends radially from the active switches towards the final users. There is a wire for each utility; therefore a considerable number if one thinks that several hundred users are connected to each IDF cabinet. Figure 1 schematically represents only a few users. The considerable number of wires must find space in the necessary cableways, adds weight on board and increases the fire load.

In addition, related to the active switch and copper wire towards the utility (generally a Cat5 or Cat6 communication wire) there is the problem of length which cannot exceed 90m (technological limit). The need for careful design of the network and verification of the laying of each wire derives from all this.

As regards the problem of installation and commissioning of the plant, it is to be noted that the copper wire used is typically a Cat5 or Cat6 standard wire, that is to say a not very robust wire highly susceptible to damage. Each wire has to be tested and certified and its physical properties measured.

To limit the extension, quantity and length of the cables, a ring architecture may be envisaged wherein the active switches are moved downstream towards the users; in this case however the band (transmittable data flow) is limited precisely by the ring architecture which causes a bottleneck in the system. This solution is not in fact utilisable on board ship, in particular on board cruise ships, where thousands of users to be served and high performance video streaming services using a lot of band are present.

The continual updating of the technology and complexity of the SDCN network determines a rapid obsolescence of the distribution network. The need to update the standard of the copper wires (and therefore relay the entire network) at intervals of 5-7 years is to be borne in mind.

A need widely felt in the ship industry and in particular in the cruise ship sector, is therefore to eliminate or at least significantly attenuate the drawbacks mentioned above.

### PRESENTATION OF THE INVENTION

Consequently, the purpose of the present invention is to eliminate or at least attenuate the drawbacks of the prior art mentioned above, by making available a ship, in particular a cruise ship, having an integrated communication network on board which occupies less space, is lighter and gives improved performance compared to the traditional systems.

A further purpose of the present invention is to make available a ship, in particular a cruise ship, having an integrated communication network on board with reduced electricity consumption.

A further purpose of the present invention is to make available a ship, in particular a cruise ship, having an integrated communication network on board which is operatively more reliable and requires less maintenance.

### BRIEF DESCRIPTION OF THE DRAWINGS

The technical characteristics of the invention, according to the aforesaid purposes, can be seen clearly from the contents of the following claims and the advantages of the same will be more clearly comprehensible from the detailed description below, made with reference to the attached drawings, showing one or more embodiments by way of non-limiting examples, wherein:
- Figure 1 shows a simplified scheme of an integrated communication network on board of a ship of the traditional type;
- Figure 2 shows a simplified scheme of an integrated communication network on board of a ship according to the invention;
- Figure 3 shows a schematised view of a side of a cruise ship according to the invention, shown partially in cross section to schematically show the integrated communication network on board;
- Figure 4 shows a second simplified scheme of an integrated communication network on board of a ship according to the invention;
- Figure 5 shows a simplified scheme of an integrated communication network on board of a ship according to the invention structured in relation to decks and fire zones; and
- Figure 6 shows a detail of a simplified view of an integrated communication network on board ship according to the invention at a final utility defined by a pair of passenger cabins of a cruise ship.

### DETAILED DESCRIPTION

With reference to the appended drawings, reference numeral 1 globally denotes a ship, in particular a cruise ship, and reference numeral 2 the relative integrated communication network on board.

According to a general embodiment of the invention, the ship 1 has an integrated communication network on board 2 which connects one or more data processing centres 100a, 100b to a plurality of users 110 by means of a data transmission network 10.

According to the invention, the data transmission network 10 is a transmission network POL (Passive Optical LAN).

The transmission network POL includes only the portion of the integrated network from the data centres 100a, 100b to the users 110, i.e. in particular the backbone and the derivations of the network. The data centre/s and the users, which may be the same as those of a traditional SDCN network, are not included in the transmission network.

In particular, the POL transmission network is made using the technology of broadband optic fibre networks GPON with the addition of a number of protocols typical of LAN (Local Area Network) networks.

According to an entirely preferred embodiment solution, shown in the appended drawings, the POL transmission network 10 has a radial or star-type structure.

Advantageously, the POL transmission network 10 has an architecture at at least three levels: primary; intermediate; and final.

As will be clarified further on in the description, in particular the POL transmission network 10 with radial architecture similar to a three-level architecture makes it possible to eliminate the active switches of the intermediate level and in their place use passive optical splitters, as shown schematically in figure 2.

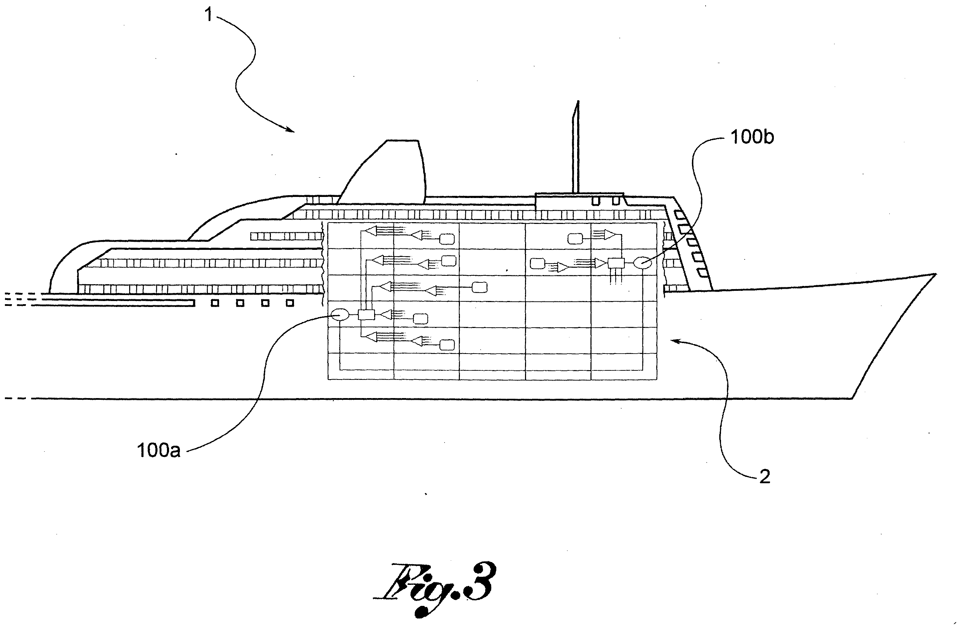

In particular, as shown in Figures 3, 4 and 5, the data transmission network 10 comprises:
- at least one OLT-Optical Line Terminal apparatus 20, which receives information from one of the data processing centres 100a, 100b, transforms it into a coded optical signal and distributes it over several distribution lines in optic fibre 30;
- a plurality of ONT-Optical Network Terminal apparatuses 40, positioned downstream of said at least one OLT apparatus 20; each ONT apparatus is connected to an optic fibre distribution line 30, decodes the optical signal and transforms it into an electric signal appropriate for interfacing with the final users; and
- a plurality of passive optical splitters 50, positioned between said at least one apparatus OLT 20 and the ONT apparatuses 40; each passive optical splitter 50 divides one optical line in input into a several secondary lines for the distribution towards other passive optical splitters and/or towards the ONT apparatuses.

The OLT apparatus 20 and the ONT decoders 30 are active apparatuses, while the transport and distribution infrastructure of the optical signal (composed of the distribution lines in optic fibre 30 and the passive optical splitters 50) is completely passive, i.e. requires no electricity supply.

In particular, each OLT apparatus 20 can connect several passive optical splitters 50 in cascade by means of optic fibre.

In particular, each of the ONT apparatuses 40 is connected to one or more users 110 by copper wires 60, which transmit the information in the form of an electric signal.

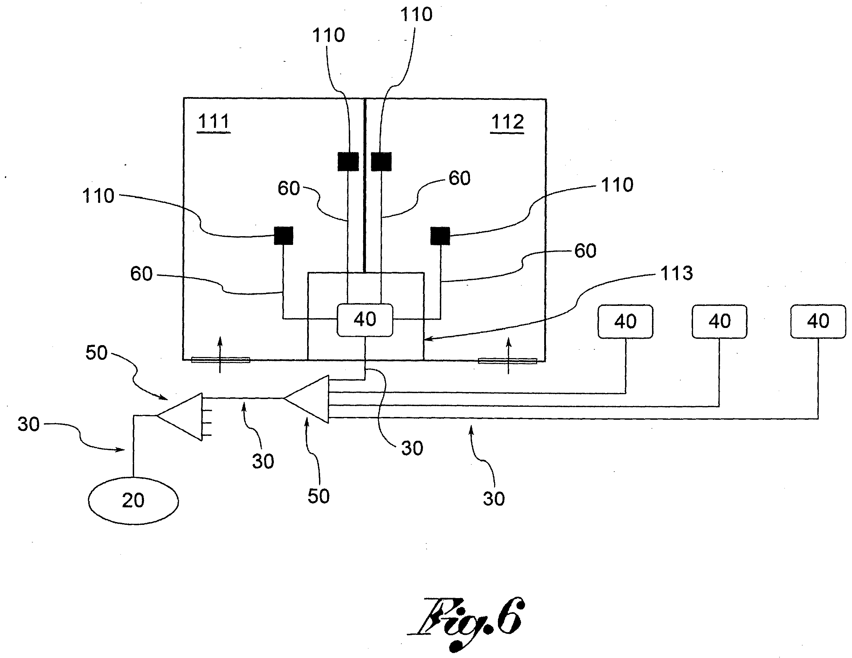

In particular, the data sockets associated to the final users are connected by copper wires Cat5/Cat6 to the single ONT apparatus, as illustrated for example in Figure 6. The final users may be data sockets for PCs, PoE telephones and telecameras, Wi-Fi transmitters and, in general, any appliance normally suitable for installation in the networks of a traditional ship.

Preferably, the optic fibres of the distribution lines 30 are of the single mode type.

Advantageously, the optic fibres of the distribution lines 30 may be of the multi-core type.

In particular, the OLT apparatus 20 is an active appliance which manages the POL network and its operating protocols and is connected in single mode optic fibre in input to a data processing centre 100a, 100b which contains the servers, the audio/video sources, the processing terminals. Preferably, the communication line between the data centre and OLT is physically redundant.

As already pointed out, the data centre (hardware and software), may be the same as a normal radial network based on active switches.

In particular, the OLT apparatus 20 gives an aggregation level of the Ethernet network of level 2 and is provided with a large number of broadband ports (at least 1 Gbps Upstream and 2 Gbps Downstream) connected in single mode optic fibre lines which branch out radially towards the final users through passive optical splitters forming a completely passive distribution network. The operating software of the POL network is installed in the OLT apparatus.

In particular, the passive optical splitters are devices able to divide one optic fibre in input into several optic fibres in output without a substantial loss of signal. The splitter, therefore, divides one optical line in input into several secondary lines for the distribution towards other passive optical splitters and/or towards the ONT, forming branches in cascade.

Advantageously, the passive optical splitters are suitable for use on board ship. Such splitters are in fact very small and do not require special installation procedures; they are also passive, i.e. do not require an electricity supply and air-conditioning unlike the active switches used in the traditional ship networks.

In particular, an ONT apparatus 40 is an active appliance which handles the communication towards the final utility. As required, the ONT apparatus 40 can power devices via Power over Ethernet (PoE), i.e., the power supply supplied on the same signal cable. An ONT apparatus may have a single port or several ports.

Advantageously, an ONT apparatus may be provided with a back-up battery.

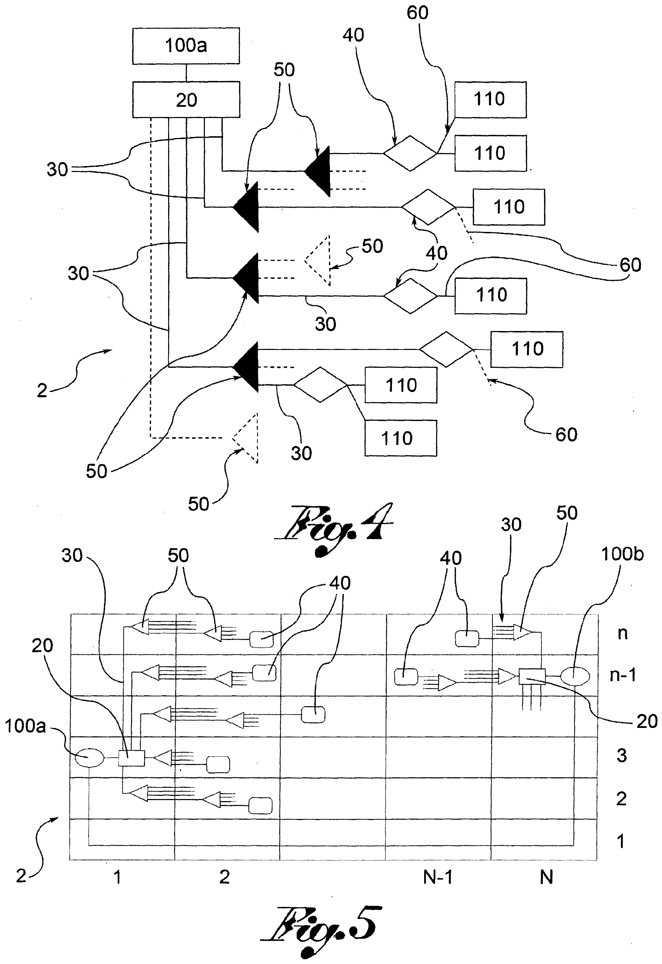

Preferably, the transmission network POL 10 follows the development of ship 1 in decks (numbered from 1 to n) and Fire Zones, numbered from 1 to N), as indicated in figure 5.

In particular, the transmission network is developed so as to exploit the advantages of the POL technology and maximise the benefits in terms of reduction of the cable and space needed for installation.

In particular, the ship 1 is provided with at least two physically interconnected data processing centres 100a, 100b.

Preferably, the two data processing centres 10a, 100b are positioned on two different decks, preferably not adjacent and two different fire zones of said ship, as shown in Figures 3 and 5.

According to a particular embodiment of the invention, to each data centre 100a, 100b an OLT apparatus 20, which handles half the final users, is associated.

The transmission network 10 may comprise two or more OLT apparatus 20 for single data centre. For constructions with a high number of fire zones and/or number of users the number of OLT apparatuses may even reach a proportion of one OLT apparatus for each fire zone. Preferably, the number of centres remains unchanged.

More in detail, the primary lines in optic fibre which, through subsequent divisions achieved by means of passive optical splitters 50 bring the signal to the ONT apparatuses 40 powering the final users, derive from the single OLT apparatus 20. From a topological point of view of the network architecture, this expedient makes it possible to shift the radial centres of the transmission network near to the users, drastically reducing the quantity of long cable sections envisaged in the networks of traditional ships. It is to be remembered in any case that according to the invention, the transmission cables for the data flow are in optic fibre and not in copper.

Preferably, the passive optical splitters 50 are of the type having one input and multiple outputs (multiples of 4, generally 1:4, 1:8, 1:16 and 1:32) to which other passive optical splitters and/or ONT apparatuses are connected. The choice of passive optical splitters is made considering both technical (loss of signal: at each division the signal loses some of its power) and economic aspects (maximum reduction of optic fibre).

In particular, sections of multi-core optic fibre can be used ending in optical sleeves, so as to reduce the final yardage of the optic fibre, despite increasing the total number of cores laid. The principle is to make a daisy chain of optic fibres between the cabin technical rooms to which an optical star configuration corresponds.

Advantageously, given that the optical splitters are very small objects, suitable for installation without particular procedures in small cabinets (100x100x50 mm against the 800x600x1800mm of the racks containing the active switches) all the installation problems are substantially overcome. The passive optical splitters can, in fact, be merely concealed in furnishing recesses, near the users, and may be grouped together if necessary, should the area in question be populated by a large number of users to be served. These furnishing recesses do not require space for maintenance and air-conditioning.

Preferably, each passive optical splitter 50 is dedicated to a single deck of the ship 1. For reasons of survival of the network in the event of a fire it is, in fact, preferable for the same optical splitter not to serve two different decks.

In particular, the choice of ONT apparatuses 40 (which require a power supply from the electricity network) is made according to the users and service associated thereto.

More in detail, for users consisting of public areas (such as public passenger areas) the ONT apparatuses 40 are of the PoE type with a quantity of ports suitable to cover the relative area. For instance 16 port apparatuses can be used, to be mounted in small racks so as to install them in the existing adjacent technical rooms or offices, through which the power supply is derived from the network too, and not from the UPS (Uninterruptible Power Supply) emergency power supply network. From each port of an ONT appliance a copper wire in Cat5- Cat6 reaches the final utility.

In particular, as already pointed out, the ship 1 may be a cruise ship (as shown in Figure 3), comprising a plurality of passenger cabins, which constitute part of the users 110.

Advantageously, the transmission network POL 10 comprises a plurality of ONT apparatuses 40 dedicated to the passenger cabins.

Advantageously, the passenger cabins can be organised into modules of two cabins 111 and 112 (in particular of the prefabricated kind).

Preferably, as shown in Figure 6, the transmission network 10 comprises a plurality of ONT apparatuses 40 each dedicated to a single module of two cabins 111, 112 for the cabin services. One example is of two cabins 111 and 112, each for two users, one for the phone and one for the TV. In this particular case each ONT will have 4 final users.

More in detail, the preferred choice, in that it makes it possible to minimise the laying of optic fibre, is to equip every pair of cabins with an ONT apparatus as in figure 6 and to install the ONT in the technical room 113 between two cabins 111 and 112 to minimise the length of the copper cables towards the users.

Particular considerations may be made wherever it should be necessary to use a single ONT apparatus per cabin or several ONT apparatuses for cabins with various users.

Generally, the SDCN system of a cruise ship is not considered an essential safety service. However, preferably, each of the ONTs 40 dedicated to the passenger cabins is provided with at least one back-up battery to guarantee passengers the service even in the case of a black-out. In particular, the ONTs of the passenger cabins are of the PoE type.

The decision to power the telephones of the passenger cabins with ONTs provided with a temporary back-up battery makes the telephone utilisable even in the case of a blackout for handling the emergency. Up to today it has not been possible to actuate this solution in the normal networks with active switches, unless a dedicated emergency power supply is provided.

In special cases ONT apparatuses may however be installed for single users without back-up batteries.

The invention permits many advantages to be obtained, some of which already pointed out above.

The installation in a ship 1 of a passive component (optic fibre cables and passive optical splitters) based transmission network leads to a drastic reduction of cable and the spaces needed for installation compared to the traditional active switch- based radial distribution. The aforementioned advantages are also evident if comparison is made to a traditional ring distribution. The transmission network according to the invention is more advantageous the more extensive it is (in terms of final users).

The ship according to the invention with POL transmission network permits a reduction of the cost of the system (CapEx, Capital Expenditure). The reduction of the CapEx is determined by the elimination of the active switches and by the reduction of the cable (both in copper and in optic fibre). Other advantages are determined by the saving of space, by a reduced need to air-condition the technical rooms and by a considerable simplicity of installation even in aggressive environments and those susceptible to electromagnetic interference. The POL transmission network seems to offer great advantages also as regards shipyard commissioning in that commissioning is very simple, all the active appliances can be preconfigured in the factory and all the users are connected simply using a plug&play logic, which the network (thanks to its operating protocols) recognises directly to self-configure.

The ship according to the invention with POL transmission network brings considerable advantages to the operator, both in terms of operating costs (OpEx, Operative Expenditure) given that it is a green IT system which saves energy, and in terms of network performance (in terms of available band and network traffic supported). Further advantages also derive from the ease of use of the POL network protocols and the reduced need for maintenance.

The POL transmission network is advantageous also in that it is not subject to obsolescence and can be re-utilised in the event of refitting of the ship.

The installation in a ship 1 of a POL transmission network offers greater potential than the traditional networks installed on board for the following reasons:
- Very broad band: suitable for the current IT, video, voice services etc. and ready for future applications requiring greater availability;
- No limit to distance: the strict technological limit of the length of the cable from switch to utility no longer exists; the optic fibre raises the limit from 90m to 20km;
- EMI (Electromagnetic Interference) Insensitivity: intrinsic characteristic of the use of optic fibre in place of copper wire in the distribution; the need for any type of wire shielding is eliminated.

As already mentioned above, the POL transmission network is easy to install and design, in particular for the following reasons:
- Ease of laying: optic fibre is robust; lines in optic fibre are, in fact, more resistant to stress from installation (tensile strength greater than Cat6 wires) and their characteristics do not lapse as a result of impact or bending; certification of the physical characteristics of the network is thus facilitated; the fibre can be "connectorized" in the same way as copper wire; installation and repair in the event of malfunction is very simple; even the addition of a passive optical splitter is simple and the network can be extended over the years in a non-invasive manner on the ship.
- Reduction of cable: the architecture based on the use of optic fibre and passive optical splitters determines a drastic reduction of cable thanks also to the flexibility of installation of the optical splitters in small recesses which do not need space or air-conditioning; the reduction of weight due to the elimination of copper wire and active appliances is considerable.
- Simplified arrangement: the optical splitters occupy negligible space and are insensitive to surrounding conditions. They can be installed in small spaces without the need for ventilation. The ground space which is saved is by no means negligible and can be used to rationalise the spaces on board ship.
- Simplified design: there are no limits to cable length; all the components are very compact and easy to manage. The calculation of the attenuation due to the components is very simple and this makes the design phase fast and suitable for being modulated.

The installation in a ship 1 of a POL transmission network offers, moreover, a series of operating advantages:
- Resistance to obsolescence: optic fibre technology is currently already able to support the technological development which will see an increase in data traffic in the network, unlike copper wires, which need replacing every 5-7 years to ensure the support of new generations of hardware. This makes it possible to avoid re-laying the network in optic fibre in the case of refitting of the ship;
- Lack of maintenance: the elimination of the active switches in practice resolves the problems of obsolescence and need for maintenance and handling of the relative parts. The overall continuity of the service is thus greater;
- Training and licences: specially trained staff are not needed for the ordinary maintenance of the switches and management of the licences;
- Active network even in the case of black-out: the ONT active appliance which connects the final utility can be served by a temporary back-up battery. The PoE infrastructure will thus continue to function even during a black-out ensuring use of the service to the passenger. This makes it possible to use the PoE telephone in the cabin and in public areas as an anti-panic safety system, something which is not currently possible unless a dedicated emergency UPS network is created.

The installation in a ship 1 of a POL transmission network offers, moreover, intrinsic advantages in terms of:
- Electrical safety: optic fibre does not transmit electricity and cannot in any case cause a fire to start in the case of mechanical damage to the line (in practice short-circuits do not exist); and
- Data security: the security of the data transmitted on optic fibre is much greater than that on traditional lines in copper wire.

Lastly, the installation in a ship 1 of a POL transmission network makes it possible to improve the environmental sustainability of the system for the following reasons:
- Electrical efficiency: the elimination of the active switches makes it possible to eliminate the electricity power supply network and the air-conditioning system. The consumption of electricity and the emissions are thus reduced.
- The reduction of the cable installed on board improves the overall eco-sustainability of the ship.

The invention thus conceived thereby achieves the intended objectives.

Obviously, its practical embodiments may assume forms and configurations different from those described while remaining within the scope of protection of the invention.

Furthermore, all the parts may be replaced with technically equivalent parts and the dimensions, shapes and materials used may be varied as required.

## Claims

1. Ship, in particular cruise ship, with integrated communication network on board (2) which connects one or more data processing centres (100a, 100b) to a plurality of users (110) by means of a data transmission network (10), **characterised by** the fact that said data transmission network (10) is a passive optical network and has a radial type structure.

2. Ship according to claim 1, wherein the data transmission network (10) has an architecture at least three levels: primary; intermediate; and final.

3. Ship according to one or more of the previous claims, wherein said data transmission network (10) comprises:
- at least one OLT-Optical Line Terminal apparatus (20), which receives information from one of the data processing centres (100a, 100b), transforms it into a coded optical signal and distributes it over several distribution lines in optic fibre (30);
- a plurality of ONT-Optical Network Terminal apparatuses (40), positioned downstream of said at least one OLT apparatus (20), each of which ONT apparatuses (40) is connected to an optic fibre distribution line (30), decodes the optical signal and transforms it into an electric signal appropriate for interfacing with the final users; and
- a plurality of passive optical splitters (50), positioned between said at least one apparatus OLT (20) and said ONT apparatuses (40), each of which splitters (50) divides one optical line in input into several secondary lines for the distribution towards other passive optical splitters and/or towards said ONT apparatuses.

4. Ship according to claim 3, wherein each of said ONT apparatuses (40) is connected to one or more users (110) by copper wires (60).

5. Ship according to one or more of the previous claims, wherein the optic fibres of the distribution lines (30) are of the single mode type.

6. Ship according to one or more of the previous claims, wherein the optic fibres of the distribution lines (30) are of the multi-core type.

7. Ship according to one or more of the previous claims, comprising at least two physically interconnected data processing centres (100a, 100b).

8. Ship according to claim 7, wherein the two data processing centres (100a, 100b) are positioned on two different decks, preferably not adjacent and on two different fire zones of the ship (1).

9. Ship according to one or more of the previous claims, wherein each passive optical splitter (50) is dedicated to a single deck of the ship (1).

10. Ship according to one or more of the previous claims, said ship (1) being a cruise ship, comprising a plurality of passenger cabins, which constitute part of the users (110), said transmission network (10) comprising a plurality of ONT apparatuses (40) dedicated to the passenger cabins.

11. Ship according to claim 10, wherein said passenger cabins are organised into modules of two cabins, said transmission network (10) comprising a plurality of ONT apparatuses (40) each dedicated to a single module of two cabins.

12. Ship according to claim 10 or 11, wherein each of the ONTs (40) dedicated to the passenger cabins is provided with at least one back-up battery.

13. Ship according to one or more of the previous claims, wherein the data transmission network (10) comprises at least one OLT apparatus (20) for each data processing centre (100a, 100b).

14. Ship according to one or more of the previous claims, wherein said transmission network (10) comprises two or more OLT apparatuses (20) for each data centre.

## Patentansprüche

1. Schiff, insbesondere Kreuzfahrtschiff, mit integriertem Kommunikationsnetzwerk an Board (2), das ein oder mehrere Datenverarbeitungszentren (100a, 100b) mit einer Mehrzahl von Benutzern (110) mittels eines Datenübertragungsnetzwerks (10) verbindet, **gekennzeichnet durch** die Tatsache, dass das Datenübertragungsnetzwerk (10) ein passives optisches Netzwerk ist und eine Struktur vom Radialtyp aufweist.

2. Schiff nach Anspruch 1, wobei das Datenübertragungsnetzwerk (10) eine Architektur zumindest drei Ebenen aufweist: primär, intermediär, final.

3. Schiff nach einem oder mehreren der vorhergehenden Ansprüche, wobei das Datenübertragungsnetzwerk (10) umfasst:
- zumindest eine OLT-Optical Line Terminal-Vorrichtung (20), die Informationen von einem der Datenverarbeitungszentren (100a, 100b) empfängt, sie in ein kodiertes optisches Signal umwandelt und dieses über mehrere Verteilungsleitungen aus optischer Faser bzw. Lichtwellenleiter (30) verteilt;
- eine Mehrzahl von ONT-Optical Network Terminal-Vorrichtungen (40), die stromabwärts der zumindest einen OLT-Vorrichtung (20) positioniert sind, wobei jede der ONT-Vorrichtungen (40) mit einer Lichtwellenleiter-Verteilungsleitung (30) verbunden ist, das optische Signal dekodiert und dieses in ein elektrisches Signal umwandelt, das zum schnittstellenmäßigen Verbinden mit den Endbenutzern geeignet ist; und
- eine Mehrzahl passiver optischer Splitter (50), die zwischen der zumindest einen Vorrichtung OLT (20) und den ONT-Vorrichtungen (40) positioniert sind, wobei jeder der Splitter (50) eine optische Leitung in Eingang in mehrere sekundäre Leitungen für die Verteilung zu anderen passiven optischen Splittern und/oder zu den ONT-Vorrichtungen hin teilt.

4. Schiff nach Anspruch 3, wobei jede der ONT-Vorrichtungen (40) durch Kupferdrähte (60) mit einem oder mehreren Benutzern (110) verbunden ist.

5. Schiff nach einem oder mehreren der vorhergehenden Ansprüche, wobei die Lichtwellenleiter der Verteilungsleitungen (30) vom Monomodentyp sind.

6. Schiff nach einem oder mehreren der vorhergehenden Ansprüche, wobei die Lichtwellenleiter der Verteilungsleitungen (30) vom mehradrigen Typ sind.

7. Schiff nach einem oder mehreren der vorhergehenden Ansprüche, umfassend zumindest zwei physikalisch miteinander verbundene Datenverarbeitungszentren (100a, 100b).

8. Schiff nach Anspruch 7, wobei die beiden Datenverarbeitungszentren (100a, 100b) auf zwei unterschiedlichen Decks, vorzugsweise nicht angrenzend, und auf zwei unterschiedlichen Brandzonen des Schiffs (1) positioniert sind.

9. Schiff nach einem oder mehreren der vorhergehenden Ansprüche, wobei jeder passive optische Splitter (50) einem einzelnen bzw. einzigen Deck des Schiffs (1) zugeordnet ist.

10. Schiff nach einem oder mehreren der vorhergehenden Ansprüche, wobei das Schiff (1) ein Kreuzfahrtschiff ist, das eine Mehrzahl von Passagierkabinen umfasst, die Teil des Benutzers (110) darstellen, wobei das Übertragungsnetzwerk (10) eine Mehrzahl von ONT-Vorrichtungen (40) umfasst, die den Passagierkabinen zugeordnet sind.

11. Schiff nach Anspruch 10, wobei die Passagierkabinen in Modulen aus zwei Kabinen organisiert sind, wobei das Übertragungsnetzwerk (10) eine Mehrzahl von ONT-Vorrichtungen (40) umfasst, die jeweils einem einzelnen bzw. einzigen Modul aus zwei Kabinen zugeordnet sind.

12. Schiff nach Anspruch 10 oder 11, wobei jede der ONTs (40), die den Passagierkabinen zugeordnet sind, mit zumindest einer Backup-bzw. Pufferbatterie versehen ist.

13. Schiff nach einem oder mehreren der vorhergehenden Ansprüche, wobei das Datenübertragungsnetzwerk (10) zumindest eine OLT-Vorrichtung (20) für jedes Datenverarbeitungszentrum (100a, 100b) umfasst.

14. Schiff nach einem oder mehreren der vorhergehenden Ansprüche, wobei das Übertragungsnetzwerk (10) zwei oder mehrere OLT-Vorrichtungen (20) für jedes Datenzentrum umfasst.

## Revendications

1. Navire, en particulier navire de croisière, avec un réseau de communication intégré à bord (2) qui connecte un ou plusieurs centres de traitement de données (100a, 100b) à une pluralité d'utilisateurs (110) au moyen d'un réseau de transmission de données (10), **caractérisé par le fait que** ledit réseau de transmission de données (10) est un réseau optique passif et a une structure de type radiale.

2. Navire selon la revendication 1, dans lequel le réseau de transmission de données (10) a une architecture d'au moins trois niveaux : primaire ; intermédiaire ; et final.

3. Navire selon une ou plusieurs des revendications précédentes, dans lequel ledit réseau de transmission de données (10) comprend :
- au moins un appareil de terminal de ligne optique OLT (20), qui reçoit des informations en provenance de l'un des centres de traitement de données (100a, 100b), les transforme en un signal optique codé et les distribue sur plusieurs lignes de distribution en fibre optique (30) ;
- une pluralité d'appareils de terminal de réseau optique ONT (40), positionnés en aval dudit au moins un appareil OLT (20), chacun des appareils ONT (40) étant connecté à une ligne de distribution en fibre optique (30), décodant le signal optique et le transformant en un signal électrique approprié pour une interface avec les utilisateurs finaux ; et
- une pluralité de séparateurs optiques passifs (50), positionnés entre ledit au moins un appareil OLT (20) et lesdits appareils ONT (40), chacun des séparateurs (50) divisant une ligne optique en entrée en plusieurs lignes secondaires pour la distribution vers d'autres séparateurs optiques passifs et/ou vers lesdits appareils ONT.

4. Navire selon la revendication 3, dans lequel chacun desdits appareils ONT (40) est connecté à un ou plusieurs utilisateurs (110) par des fils en cuivre (60).

5. Navire selon une ou plusieurs des revendications précédentes, dans lequel les fibres optiques des lignes de distribution (30) sont du type monomode.

6. Navire selon une ou plusieurs des revendications précédentes, dans lequel les fibres optiques des lignes de distribution (30) sont du type multicoeur.

7. Navire selon une ou plusieurs des revendications précédentes, comprenant au moins deux centres de traitement de données (100a, 100b) interconnectés physiquement.

8. Navire selon la revendication 7, dans lequel les deux centres de traitement de données (100a, 100b) sont positionnés sur deux ponts différents, de préférence non adjacents et sur deux tranches d'incendie différentes du navire (1).

9. Navire selon une ou plusieurs des revendications précédentes, dans lequel chaque séparateur optique passif (50) est dédié à un seul pont du navire (1).

10. Navire selon une ou plusieurs des revendications précédentes, ledit navire (1) étant un navire de croisière, comprenant une pluralité de cabines passagers, qui constituent une partie des utilisateurs (110), ledit réseau de transmission (10) comprenant une pluralité d'appareils ONT (40) dédiés aux cabines passagers.

11. Navire selon la revendication 10, dans lequel lesdites cabines passagers sont organisées en modules de deux cabines, ledit réseau de transmission (10) comprenant une pluralité d'appareils ONT (40) chacun dédié à un seul module de deux cabines.

12. Navire selon la revendication 10 ou 11, dans lequel chacun des ONT (40) dédiés aux cabines passagers est doté d'au moins une batterie de secours.

13. Navire selon une ou plusieurs des revendications précédentes, dans lequel le réseau de transmission de données (10) comprend au moins un appareil OLT (20) pour chaque centre de traitement de données (100a, 100b).

14. Navire selon une ou plusieurs des revendications précédentes, dans lequel ledit réseau de transmission (10) comprend deux appareils OLT (20) ou plus pour chaque centre de données.
